# EUROPÄISCHE PATENTSCHRIFT

(11) **EP 0 856 674 B1**
(45) Veröffentlichungstag und Bekanntmachung des Hinweises auf die Patenterteilung: **21.08.2002**
(21) Anmeldenummer: 98890002.3
(22) Anmeldetag: 02.01.1998
(51) Int. Cl.: F16D 3/72

(54) **Kupplungsglied**
Coupling device
Dispositif d'accouplement

(30) Priorität: 04.02.1997 AT 16997
(43) Veröffentlichungstag der Anmeldung: 05.08.1998
(73) Patentinhaber: Dr. Ing. Geislinger & Co. Schwingungstechnik Gesellschaft m.b.H., 5300 Hallwang/Salzburg (AT)
(72) Erfinder: Geislinger, Matthias, Dipl.-Ing., 5300 Salzburg (AT)
(74) Vertreter: Hübscher, Gerhard, Dipl.-Ing.

(56) Entgegenhaltungen:
- EP-A- 0 534 925
- DE-A- 3 517 681
- FR-A- 2 653 505
- US-A- 1 639 481
- US-A- 1 664 052

## Beschreibung

Die Erfindung bezieht sich auf ein Kupplungsglied zur drehmomentübertragenden Antriebsverbindung zwischen einem motorseitigen Abtriebsflansch und einem getriebeseitigen Antriebsflansch mit einem mittleren Rohrteil und stirnseitigen Membranteilen, wobei die Membranteile Anschlußränder zur Schraubbefestigung an den Abtriebs- bzw. Antriebsflanschen aufweisen und Membran- und Rohrteile aus faserverstärktem Kunststoff bestehen.

Kupplungsglieder aus Rohr- und Membranteilen werden meist als Verbindungselement zwischen den beiden Hälften einer Wellenkupplung oder unmittelbar als Wellenteil in einen Antriebsstrang eingesetzt und gewährleisten nicht nur wegen ihrer Torsionsfestigkeit eine einwandfreie Drehmomentübertragung, sondern erlauben auch wegen der Verformbarkeit ihrer Membranteile einen Versatzausgleich der miteinander zu kuppelnden Antriebsteile, wobei je nach Anforderungen unterschiedliche Membran- und Rohrteilformen möglich sind und die Rohrteile und Membranteile als Einzelstücke vorgefertigt oder als einheitliche Kupplungsglieder hergestellt werden können (AT 391.355 B, AT 395.900 B, AT 395.901 B, AT 395.639 B und AT 401.963 B). Allerdings sind diese Kupplungsglieder vor allem bei hohen Elastizitätsansprüchen mit einem entsprechenden Platzbedarf verbunden, so daß ihr Einsatz bei beengten Platzverhältnissen, beispielsweise in Antriebsanlagen von Schiffen zur beugeelastischen Antriebsverbindung zwischen Motor und Getriebe, oft schwierig ist und für die Montage sogar den Ausbau des Getriebes verlangt, was diesen Einsatz grundsätzlich in Frage stellt.

Der Erfindung liegt daher die Aufgabe zugrunde, ein Kupplungsglied der eingangs geschilderten Art zu schaffen, das sich bei voller Nutzung seiner werkstoff- und gestaltungsspezifischen Eigenschaften durch seine Montage- und Demontagefreundlichkeit auszeichnet

Die Erfindung löst diese Aufgabe dadurch, daß die Membranteile im Außenumfangsbereich am Rohrteil ansetzen und im Innenumfangsbereich die Anschlußränder bilden, daß der Rohrteil entlang einer achsnormalen Trennebene in zwei Rohrabschnitte getrennt ist und die beiden Rohrabschnitte über auswärts ragende Flanschränder miteinander verschraubt sind und daß der getriebeseitige Membranteil am zugehörenden Antriebsflansch mittels Kopfschrauben von außen und der motorseitige Membranteil am zugehörenden Abtriebsflansch mittels Kopfschrauben von innen festschraubbar sind. Durch den am Außenumfang der Membranteile ansetzenden Rohrteil können die Membranteile trotz ihres radial innenliegenden Anschlußrandes groß genug bemessen werden, um die gewünschten Anforderungen hinsichtlich der Beugeelastizität zu erfüllen, wobei sich eine wellige Profilierung und eine nach außen abnehmende Wandstärke der Membranteile anbieten. Außerdem wird durch den entsprechend großen Rohrteildurchmesser ein ausreichender Hohlraum innerhalb des Kupplungsgliedes ausgeformt, der ein Setzen von Befestigungsschrauben vom Inneren her erlaubt. Ist darüber hinaus der Rohrteil in zwei axiale Rohrabschnitte getrennt und sind die Teile von außen verschraubbar, läßt sich das Kupplungsglied abschnittsweise montieren bzw. demontieren, wenn zumindest der eine Rohrabschnitt über den zugehörigen Membranteil und mittels außen zugänglicher Kopfschrauben am zugehörigen Flansch befestigt ist Da meist getriebeseitig ein größerer Freiraum vorhanden ist als motorseitig, wo wegen des unterzubringenden Motorzubehörs, wie Ladegeräte, Filtereinrichtungen u. dgl., entsprechende Platznot herrscht und auf Grund des vorhandenen Schwungrades in unmittelbarer axialer Nähe zum Abtriebsflansch auch kaum Spielraum zum Setzen von Befestigungsschrauben verbleibt, wird bevorzugt die getriebeseitige Kupplungsgliedbefestigung von außen zugänglich sein. Damit besteht nun die Möglichkeit, nach einem Aufschrauben der Kopfschrauben im Bereich des Antriebsflansches und der Verbindungsschrauben zwischen den beiden Rohrabschnitten den getriebeseitigen Rohrabschnitt mit zugehörigem Membranteil vom motorseitigen Rohrabschnitt zu lösen und für sich auszubauen, was wegen der gegenüber dem gesamten Kupplungsglied entsprechend kleineren Abmessungen dieses Kupplungsgliedteiles ohne weiteres gelingt, worauf dann der Hohlraum des anderen Rohrabschnittes zugänglich ist und die Kopfschrauben zur Flanschbefestigung des motorseitigen Membranteiles aufgeschraubt werden können, so daß sich schwierigkeitslos auch der zweite Rohrabschnitt mit dem anschließenden Membranteil ausbauen läßt. Die Montage bzw. der Einsatz des Kupplungsgliedes erfolgt in umgekehrter Weise, indem zuerst der eine, meist der motorseitige, Rohrabschnitt mit seinem Membranteil von innen an den Abtriebsflansch angeschraubt wird, dann der getriebeseitige Rohrabschnitt mit seinem Membranteil zugefügt und die Rohrabschnitte miteinander und der Membranteil mit dem Antriebsflansch von außen verschraubt werden. Die Membranteile selbst bleiben von dieser Zerlegung unberührt und werden in ihrer Beugeelastizität und Torsionsfähigkeit nicht beeinträchtigt und für den Rohrteil ergibt sich durch die Teilung und die gegenseitige Verbindung der Rohrabschnitte über die Flanschränder eine der Drehmomentübertragung zugute kommende Versteifung. Die Trennebene läßt sich nach den jeweiligen Einbauverhältnissen in ihrer axialen Lage optimieren, wobei in den meisten Fällen eine mittige Trennung durchaus zum Ziel führen wird und eine gleiche Ausbildung beider Kupplungsgliedhälften gestattet.

An sich wäre es durchaus möglich, den Membranteil und den anschließenden Rohrabschnitt jeweils als Einzelteile vorzufertigen und anschließend durch Verkleben oder Verschrauben zu einer Konstruktionseinheit zu verbinden. Zweckmäßig ist es aber, wenn die Rohrabschnitte mit den Membranteilen jeweils einen einheitlichen Bauteil bilden, der rationell hergestellt werden kann und sich leicht hantieren läßt.

Günstig ist es auch, wenn sich die Rohrabschnitte zu den Flanschrändern hin kegelig verjüngen, so daß einerseits die auswärts vorragenden Flanschränder radial nicht über den Außenumfangsbereich der Membranteile vorzustehen brauchen und anderseits durch die Kegeligkeit der Rohrabschnitte eine Versteifungswirkung erzielt wird, womit vergleichsweise dünne, gleichbleibende Wandstärken für den Rohrteil genügen.

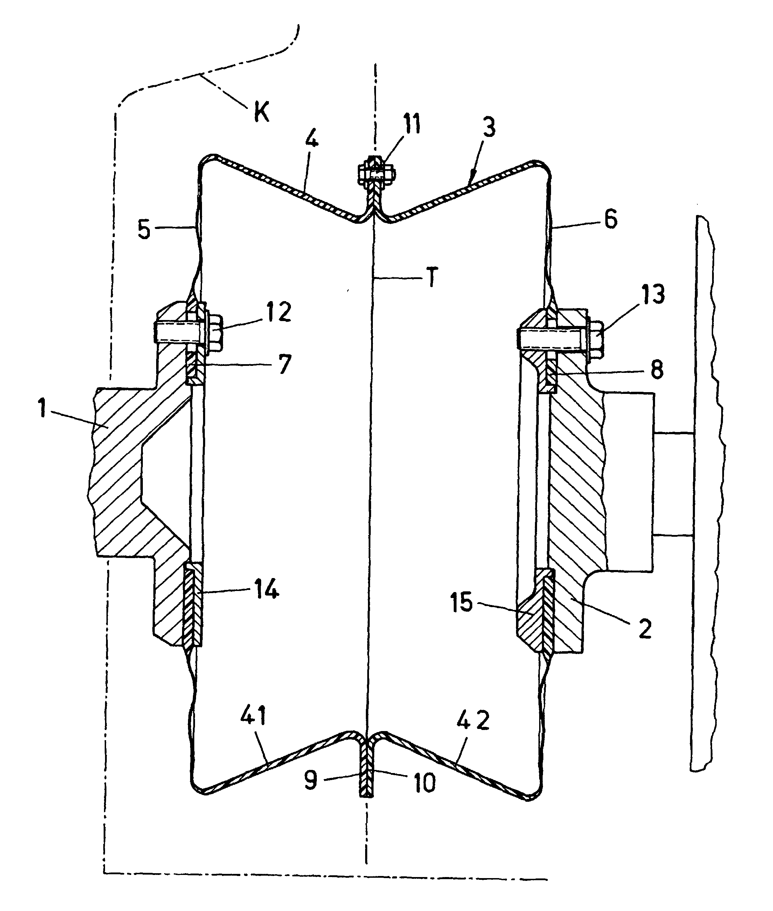

In der Zeichnung ist ein Ausführungsbeispiel des erfindungsgemäßen Kupplungsgliedes schematisch an Hand eines Axialschnittes näher veranschaulicht.

Zur Antriebsverbindung zwischen einem motorseitigen Abtriebsflansch 1 und einem getriebeseitigen Antriebsflansch 2 ist ein torsionssteifes, aber biegeelastisches Kupplungsglied 3 mit einem mittleren Rohrteil 4 und stirnseitigen Membranteilen 5, 6 vorgesehen, wobei Rohrteil 4 und Membranteile 5, 6 aus faserverstärktem Kunststoff bestehen.

Um das Kupplungsglied 3 auch bei engen Platzverhältnissen gut montierbar zu machen, bilden die Membranteile 5, 6 im Innenumfangsbereich jeweils einen Anschlußrand 7, 8 zur Schraubbefestigung mit den An- bzw. Abtriebsflanschen 1, 2 und gehen im Außenumfangsbereich in den Rohrteil 4 über, der seinerseits entlang einer achsnormalen Trennebene T in zwei Rohrabschnitte 41, 42 getrennt ist. Diese beiden Rohrabschnitte 41, 42 verjüngen sich zur Trennebene T hin kegelig und sind miteinander über auswärtsragende Flanschränder 9, 10 mittels um den Umfang verteilter Befestigungsschrauben 11 verschraubt Zum Anschluß der Membranteile 5, 6 an den zugehörenden An- bzw. Abtriebsflanschen 1, 2 sind Kopfschrauben 12, 13 vorgesehen, von denen die getriebeseitigen Kopfschrauben 13 von außen und die motorseitigen Kopfschrauben 12 von innen gesetzt sind und die Anschlußränder 7, 8 der jeweiligen Membranteile 5, 6 zwischen dem Abtriebsflansch 1 und einem den Anschlußrand 7 innen umgreifenden Druckring 14 bzw. zwischen dem Antriebsflansch 2 und einem den Anschlußrand 8 innen umgreifenden Flanschring 15 einspannen.

Herrschen auf Grund ausladender Zubehörteile für den Motor od. dgl., die durch eine Umrißkontur K angedeutet sind, beengte Einbauverhältnisse, läßt sich das Kupplungsglied 3 zur Montage bzw. Demontage zerlegen und abschnittsweise ein- bzw. ausbauen. So kann zur Demontage zuerst der Rohrabschnitt 42 durch das Aufschrauben der Befestigungsschrauben 11 und der Kopfschrauben 13 für sich alleine vom Antriebsflansch 2 bzw. dem motorseitigen Rohrabschnitt 41 gelöst und abgenommen werden, worauf die Kopfschrauben 12 von innen her ausschraubbar sind und sich der motorseitige Rohrabschitt 41 entfernen läßt, was auch bei entsprechend engen Freiräumen gelingt. Zur Montage braucht dann lediglich in umgekehrter Reihenfolge zuerst der motorseitige Rohrabschnitt 41 mit dem Membranteil 5 über die Kopfschrauben 12 von innen her am Abtriebsflansch 1 befestigt zu werden, so daß anschließend der getriebeseitige Rohrabschnitt 42 eingefügt und einerseits mit dem schon fixierten Rohrabschnitt 41, anderseits mit dem Abtriebsflansch 2 von außen verschraubt werden kann, und das Kupplungsglied 3 ist ordnungsgemäß eingebaut

## Patentansprüche

1. Kupplungsglied (3) zur drehmomentübertragenden Antriebsverbindung zwischen einem motorseitigen Abtriebsflansch (1) und einem getriebeseitigen Antriebsflansch (2) mit einem mittleren Rohrteil (4) und stirnseitigen Membranteilen (5, 6), wobei die Membranteile (5, 6) Anschlußränder (7, 8) zur Schraubbefestigung an den Abtriebs- bzw. Antriebsflanschen (1, 2) aufweisen und Membran- und Rohrteile (4, 5, 6) aus faserverstärktem Kunststoff bestehen, **dadurch gekennzeichnet, daß** die Membranteile (5, 6) im Außenumfangsbereich am Rohrteil (4) ansetzen und im Innenumfangsbereich die Anschlußränder (7, 8) bilden, daß der Rohrteil (4) entlang einer achsnormalen Trennebene (T) in zwei Rohrabschnitte (41, 42) getrennt ist und die beiden Rohrabschnitte (41, 42) über auswärts ragende Flanschränder (9, 10) miteinander verschraubt sind und daß der getriebeseitige Membranteil (6) am zugehörenden Antriebsflansch (2) mittels Kopfschrauben (13) von außen und der motorseitige Membranteil (5) am zugehörenden Abtriebsflansch (1) mittels Kopfschrauben (12) von innen festschraubbar sind.

2. Kupplungsglied nach Anspruch 1, **dadurch gekennzeichnet, daß** die Rohrabschnitte (41, 42) mit den Membranteilen (5, 6) jeweils einen einheitlichen Bauteil bilden.

3. Kupplungsglied nach Anspruch 1 oder 2, **dadurch gekennzeichnet, daß** sich die Rohrabschnitte (41, 42) zu den Flanschrändern (9, 10) hin kegelig verjüngen.

## Claims

1. A coupling element (3) for a driving connection for transmitting torque between an output flange (1) on a motor or engine and a driven flange (2) on a transmission or gear, with a central tubular part (4) and end-face membrane parts (5, 6), the membrane parts (5, 6) having connecting edges (7, 8) for screw fixing on the output and driven flanges (1, 2) and the membrane and tubular parts (4, 5, 6) consist of fibre-reinforced plastic, **characterised in that** the membrane parts (5, 6) are attached to the tubular part (4) in the outer peripheral zone and form the connecting edges (7, 8) in the inner peripheral zone, **in that** the tubular part (4) is separated into two tube portions (41, 42) along an axis-normal separating plane (T) and the two tube portions (41, 42) are screwed together via outwardly projecting flange edges (9, 10) and **in that** the membrane part (6) on the transmission or gear is adapted to be screwed fast on the associated driven flange (2) by means of headed bolts (13) from outside while the membrane part (5) on the engine or motor is adapted to be screwed fast on the associated output flange (1) by means of headed bolts (12) from the inside.

2. A coupling member according to claim 1, **characterised in that** the tube portions (41, 42) respectively form a unitary component with the membrane parts (5, 6).

3. A coupling member according to claim 1 or 2, **characterised in that** the tube portions (41, 42) taper conically towards the flange edges (9, 10).

## Revendications

1. Dispositif d'accouplement (3) pour la liaison d'entraînement, avec transmission d'un couple, entre une bride de partie menée (1), située côté moteur, et une bride de partie menante (2), située côté transmission, avec une partie tubulaire (4) centrale, et des parties formant membrane (5, 6) situées côté frontal, les parties formant membrane (5, 6) présentant des bords de raccordement (7, 8) pour la fixation par vissage aux brides de partie menée ou menante (1, 2), et les parties formant membrane et tubulaire (4, 5, 6) étant formées d'une matière synthétique renforcée par des fibres, **caractérisé en ce que** les parties formant membrane (5, 6) se plaquent dans la zone périphérique extérieure sur la partie tubulaire (4) et forment, dans la zone périphérique intérieure, les bords de raccordement (7, 8), **en ce que** la partie tubulaire 4 est séparée en deux tronçons tubulaires (41, 42), le long d'un plan de séparation (T) perpendiculaire à l'axe, et les deux tronçons tubulaires (41, 42) sont vissés ensemble par l'intermédiaire de bords de bride (9, 10) faisant saillie vers l'extérieur, et **en ce que** la partie formant membrane (6) situé côté transmission est susceptible d'être fixée par vissage sur la bride d'entraînement (2) afférente, à l'aide de vis à têtes (13) depuis l'extérieur, et la partie formant membrane (5) située côté moteur est susceptible d'être fixée par vissage sur la bride de partie menée (1) afférente à l'aide de vis à tête (12), depuis l'intérieur.

2. Dispositif d'accouplement selon la revendication 1, **caractérisé en ce que** les tronçons tubulaires (41, 42) forment avec les parties formant membrane (5, 6) chaque fois une pièce de construction unitaire.

3. Dispositif d'accouplement selon la revendication 1 ou 2, **caractérisé en ce que** les tronçons tubulaires (41, 42) vont en s'effilant de façon conique en allant en direction des bords de brides (9, 10).
